# EUROPÄISCHE PATENTSCHRIFT

(11) **EP 3 470 879 B1**
(45) Veröffentlichungstag und Bekanntmachung des Hinweises auf die Patenterteilung: **02.12.2020**
(21) Anmeldenummer: 17196669.0
(22) Anmeldetag: 16.10.2017
(51) Int. Cl.: G01S 17/42, G01S 17/88

(54) **OPTOELEKTRONISCHER SENSOR UND VERFAHREN ZUR SICHEREN ERFASSUNG VON OBJEKTEN**
OPTOELECTRONIC SENSOR AND METHOD FOR SECURELY DETECTING OBJECTS
CAPTEUR OPTOÉLECTRONIQUE ET PROCÉDÉ DE DÉTECTION SÉCURISÉE D'OBJETS

(43) Veröffentlichungstag der Anmeldung: 17.04.2019
(73) Patentinhaber: SICK AG, 79183 Waldkirch (DE)
(72) Erfinder: Brunner, Fabio, 79100 Freiburg (DE)

(56) Entgegenhaltungen:
- EP-A1- 1 835 306
- DE-A1-102012 101 460
- NISHIDA DAIKI ET AL: "Development of Intelligent Automatic Door System", 2014 IEEE INTERNATIONAL CONFERENCE ON ROBOTICS AND AUTOMATION (ICRA), IEEE, 31. Mai 2014 (2014-05-31), Seiten 6368-6374, XP032650086, DOI: 10.1109/ICRA.2014.6907799 [gefunden am 2014-09-22]

## Beschreibung

Die Erfindung betrifft einen optoelektronischen Sensor und ein Verfahren zur sicheren Erfassung von Objekten in einem Überwachungsbereich nach dem Oberbegriff von Anspruch 1 beziehungsweise 14.

Derartige Sensoren werden unter anderem zur Absicherung von Maschinen eingesetzt. Herkömmlich wird dazu ein Schutzfeld überwacht, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe.

Eine mit der Absicherung einer Maschine verwandte Aufgabe ist eine Zugangskontrolle, welche den Personenkreis begrenzt, der sich in einem bestimmten Bereich aufhält. Dabei sind wiederum sehr unterschiedliche Sicherheitsanforderungen vorstellbar, die vom einfachen Zählen etwa an Flughäfen bis zu einer strengen Zugangsbeschränkung für ganz bestimmte Bedienpersonen reichen. Gerade für den letzteren Fall werden häufig besonders gesicherte Türen eingesetzt. Sobald jedoch die Tür unter Beachtung der Absicherungsprozedur geöffnet wurde, fehlt es an einer Kontrolle, ob tatsächlich nur eine Person hindurchtritt. Dementsprechend ist auch die Anzahl der Personen im gesicherten Bereich unbekannt.

Herkömmlich sind in einigen Fällen über die Zugangskontrolle hinaus weitere Maßnahmen der Absicherung vorgesehen. So wird bei einer LOTO-Prozedur (Lock out, Tag out) eine Maschine im gesicherten Bereich zusätzlich gegen unautorisiertes Einschalten gesichert. Es handelt sich aber um eine reine Organisationsmaßnahme, die auf dem Handeln des Maschinenbedieners beim Verlassen des gesicherten Bereichs basiert. Dies kann in Erweiterungen erzwungen werden, die bestimmte Prozeduren beim Verlassen des gesicherten Bereichs oder dem Wiederanlaufen der Maschine fordern. Das begrenzt die Handlungsmöglichkeiten von Personen, die unbemerkt in den gesicherten Bereich gelangt sind, verhindert aber nicht deren Anwesenheit. Eine echte Eintrittsschleuse, die nur jeweils einer Person Zugang gewährt, ist auch bekannt, aber sehr aufwändig und im Alltag umständlich, etwa ungeeignet für den Zugang mit einem Wagen.

In manchen Anwendungen ist demnach wünschenswert, genauere Informationen zu erfassen als eine bloße binäre Schutzfeldverletzung. Das gilt beispielsweise für kooperative Arbeitsplätze, an denen Mensch und Roboter eng zusammenarbeiten. Dafür eignen sich aber verfügbare sichere Sensoren nur bedingt. So ist zwar denkbar, mehrere Lichtgitter parallel zueinander zu montieren und so verschiedene Annährungspositionen oder auch deren Abfolge zu erfassen. Der Aufwand für die Montage ist hoch und im Grunde nur in einer Art Korridor nutzbar, in denen die Lichtgitter an deren seitlicher Begrenzung montiert sind. Trotzdem bleiben die so gewonnenen Zusatzinformationen begrenzt.

Laserscanner liefern grundsätzlich wesentlich genauere Positionsinformationen und werden bereits häufig in der Sicherheitstechnik eingesetzt. Ein derartiger Sicherheitslaserscanner ist aus der DE 43 40 756 A1 bekannt. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Auch die dritte Raumkoordinate kann durch eine Relativbewegung in Querrichtung noch erfasst werden, beispielsweise durch einen weiteren Bewegungsfreiheitsgrad der Ablenkeinheit in dem Laserscanner oder indem das Objekt relativ zu dem Laserscanner bewegt wird.

Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Die Positionsinformation in zweidimensionalen Polarkoordinaten ist aber nur intern verfügbar, und bisher gibt es keine Geräte, welche diese Informationen auf sichere Weise nach außen weitergeben. Selbst wenn zukünftig eine entsprechende sichere Ausgabe geschaffen wird, müsste dann auch die gesamte Auswertung nach außen verlagert werden, und es erfordert sehr aufwändige Programmierung außerhalb des Laserscanners, um auf diesem Weg eine Sicherheitsanwendung zu lösen, zumal diese Programmierung eine in sich sichere Auswertung gewährleisten muss.

Sicher ausgegeben wird dagegen die Information, ob ein Schutzfeld verletzt ist, und dieses Schutzfeld ist in bekannten Laserscannern frei konfigurierbar. Das bietet einen ganz anderen Ansatzpunkt, um Objekteingriffe zu lokalisieren, der keines sicheren Zugriffs auf die Rohdaten Abstand und Winkel bedarf und die vorhandene Erkennung von Schutzfeldverletzungen ausnutzt, statt die Auswertung komplett neu zu programmieren. Sind allerdings mehrere Schutzfelder vorgesehen, was für eine einigermaßen flexible Lokalisierung eines Objektes erforderlich ist, so wird üblicherweise zwischen diesen Schutzfeldern umgeschaltet. Die Ansprechzeit für jedes einzelne Schutzfeld ist dadurch erheblich erhöht.

Seit kurzem gibt es auch Laserscanner, die mehrere Schutzfelder simultan auswerten. Im Prinzip ist die Anforderung damit erfüllt, denn nun kann man den Überwachungsbereich frei in parallel überwachte Schutzfelder unterteilen und aus der Identität eines verletzten Schutzfeldes auf die momentane Position des eingreifenden Objekts schließen.

Das ermöglicht nicht nur eine Lokalisierung, sondern auch eine sogenannte Sequenzüberwachung, bei der festgestellt wird, ob Schutzfelder in einer bestimmten Reihenfolge betreten werden, um so eine Bewegung nachzuvollziehen. Das wird beispielsweise genutzt, damit bei Annäherung an einen Roboter Schutzfelder in der richtigen Abfolge verletzt und anschließend wieder in umgekehrter Reihenfolge verlassen werden. Dann kann der Roboter lediglich verlangsamen, solange die Person in der Nähe ist, und danach direkt in voller Geschwindigkeit weiterarbeiten, statt wie klassisch mit einem Nothalt gestoppt zu werden, was auch einen mühsamem Wiederanlauf nach sich zöge.

Allerdings ist die simultane Auswertung sehr rechenintensiv und daher bislang nur für maximal vier parallele Schutzfelder vorgesehen. Dabei wird jedes Schutzfeld eigenständig betrachtet und direkt mit einer Aktion in der Sicherheitslogik verknüpft, wie einer Notabschaltung oder einem Sequenzzähler, der bei einer Sequenzüberwachung eine erwartete Bewegung verfolgt. Dadurch werden die wenigen verfügbaren Schutzfelder sehr rasch ausgeschöpft. Selbst wenn sich die Anzahl parallel überwachbarer Schutzfelder in zukünftigen Gerätegenerationen erhöht, bleibt dies ein stark limitierender Faktor für die Ortauflösung einer Positionsbestimmung oder das Nachvollziehen einer Bewegung durch Sequenzüberwachung mit Schutzfeldern.

Die EP 2 012 253 B1 offenbart eine Kombination eines RFID-Lesers mit einem Laserscanner, wobei letzterer dafür zuständig ist zu erkennen, ob sich ein Objekt, dessen RFID-Tag gelesen wurde, in einer erwarteten Weise durch ein Lesetor mit dem RFID-Leser bewegt hat. Der Laserscanner überwacht dafür eine Sequenz von Feldern, in die ein Objekt in der richtigen Reihenfolge eingedrungen sein sollte. Dieser Laserscanner ist aber nicht sicher. In der Anwendung sollen keine Personen geschützt, sondern lediglich Fehllesungen entfernter RFID-Tags vermieden werden. Außerdem ist die Überwachung sehr grob, denn es kommt lediglich auf die Nähe des Objekts zu der Lesestation und die Bewegungsrichtung an, die sich mit sehr wenigen Überwachungsfeldern zuverlässig bestimmen lässt.

Die EP 1 835 306 A1 offenbart eine Vorrichtung zur Erfassung von Hindernissen in der Umgebung eines Fahrzeugs. Ein Sensor sendet einen Lichtfächer mit einem Hell-Dunkel-Muster aus, das bei Relativbewegung eines Objekts in den Lichtfächer hinein ein entsprechendes Hell-Dunkel-Muster im Sensor auslöst und durch Zählen der Übergänge im zeitlichen Verlauf eine Lokalisierung des Objekts in Bewegungsrichtung ermöglicht. Es wird erweiternd vorgeschlagen, mit einem zweiten Hell-Dunkel-Muster einer anderen Wellenlänge quer zu dem ersten Hell-Dunkel-Muster eine Ortsauflösung in zwei Koordinaten zu erreichen.
In der DE 10 2012 101 460 A1 wird eine LIDAR-Vorrichtung zur Erfassung von Umgebungsobjekten für ein Fahrzeug vorgeschlagen, bei dem eine Mehrzahl nicht überlappender, vorzugsweise streifenförmiger Sendebereiche erzeugt wird. Durch sequentielle Ansteuerung kann unterschieden werden, in welchem Sendebereich sich ein Objekt befindet. In einer Ausführungsform werden zusätzlich streifenförmige Empfangsbereiche orthogonal zu den streifenförmigen Sendebereichen angeordnet. Ein automatisches Türsystem mit Sensor ist aus D. Nishida et al., "Development of Intelligent Automatic Door System", IEEE International Conference on Robotics & Automation (ICRA), May 31 - June 7, 2014, Hongkong, China bekannt.

Es ist daher Aufgabe der Erfindung, die Erfassung von Objekten mit simultan überwachten Schutzfeldern zu verbessern.
Diese Aufgabe wird durch einen optoelektronischen Sensor und ein Verfahren zur sicheren Erfassung von Objekten in einem Überwachungsbereich nach Anspruch 1 beziehungsweise 14 gelöst. Der Sensor ist in der Lage, Objekte sicher zu erfassen. Dazu wird das Empfangslicht aus dem Überwachungsbereich ausgewertet, um eine erste Anzahl von Überwachungsfeldern simultan zu überwachen. Überwachungsfelder sind insbesondere frei konfigurierte Teilbereiche des Überwachungsbereichs entsprechend den einleitend erläuterten Schutzfeldern, deren Verletzung aber anders als herkömmlich nicht zwingend unmittelbar zu einer sicherheitsgerichteten Reaktion führt. Durch die simultane Überwachung wird sicher erfasst, in welchem Überwachungsfeld sich ein Objekt befindet, was klassisch als Schutzfeldverletzung bezeichnet würde. Natürlich ist der Fall eingeschlossen, dass es derzeit keine Schutzfeldverletzungen gibt, also alle Überwachungsfelder frei von Objekten sind. Dabei ist mit Objekt insbesondere ein unzulässiges Objekt gemeint, denn es ist möglich, bestimmte Objekte zu ignorieren oder auszublenden, etwa weil sie zu klein sind, nur ganz kurzzeitig auftreten, oder weil es sich um bekannte und erlaubte Objekte handelt.

Die Erfindung geht nun von dem Grundgedanken aus, Überwachungsfelder zumindest teilweise überlappen zu lassen. Das erscheint aus dem Blickwinkel der herkömmlichen Absicherungsfunktion zunächst sinnlos, denn dafür genügt es, wenn einmal erkannt ist, ob sich ein Objekt in einer gefährlichen Position befindet. Durch die Überlappung entsteht eine zweite Anzahl von Überlappungssegmenten, wobei die zweite Anzahl größer ist als die erste Anzahl, es also mehr und insbesondere deutlich mehr Überlappungssegmente als Überlappungsfelder gibt. Die Überlappungssegmente definieren sich darüber, welche Überlappungsfelder dort jeweils überlappen, so dass also innerhalb eines Überwachungssegments dieselben Überwachungsfelder überlappen, während sich dies zu einem anderen Überwachungssegment hinsichtlich mindestens eines Überwachungsfeldes ändert, d.h. mindestens ein Überlappungsfeld hinzukommt, wegfällt oder wechselt. Nochmals anders ausgedrückt hat jedes Überwachungssegment eine Art Fingerabdruck der dort überlappenden Überwachungsfelder, wobei man sich den Fingerabdruck beispielsweise als binären Vektor vorstellen kann. Dessen Dimension entspricht der ersten Anzahl, und seine binären Einträge enthalten jeweils eine Eins für Überwachungsfelder, die mit dem Überwachungssegment überlappt, und sonst Nullen. Mindestens ein Eintrag dieses Fingerabdrucks variiert von Überwachungssegment zu Überwachungssegment.

Die Erfassung ist sicher vorzugsweise im Sinne von Maschinensicherheit, insbesondere nach den einleitend genannten Normen. Das bedeutet aber nicht zwingend, dass der Sensor in einer Sicherheitsapplikation eingesetzt ist. Beispielsweise ist auch denkbar, dass die Konfiguration der Überwachungsfelder keine normgerechte Sicherheit bietet, oder dass die Anwendung nur auf Beobachtung oder beispielsweise Absichern im Sinne von Diebstahlsicherung, nicht Schutz vor Verletzungsgefahren zielt.

Die Erfindung hat den Vorteil, dass effektiv die Anzahl simultan überwachbarer Felder von der eigentlich hardwareseitig vorgesehenen ersten Anzahl auf die zweite Anzahl erhöht wird. Das ermöglicht eine genauere Positionsbestimmung, aber auch Informationen über eine Bewegung oder eine Objektgröße, was genutzt werden kann, um einen Roboter oder eine Maschine sicher zu verlangsamen oder einen Arbeitsschritt in einen Bereich zu verlagern, der weiter weg von dem Objekteingriff liegt und somit keine Person gefährdet. Das ist nur ein Beispiel einer Vielzahl denkbarer einfacher Lösungen für Anwendungen, die von der verbesserten Information profitieren und dabei Stillstandzeiten des Roboters oder der Maschine soweit möglich vermeiden. Dabei ist die Konfiguration und Auswertung von Überwachungsfeldern oder Überwachungssegmenten wesentlich einfacher zu handhaben und zu programmieren als eine Rohinformation beispielsweise in Form von Abstand und Winkel.

Ein erfasstes Objekt wird anhand der Überwachungsfelder, in denen ein Objekt erkannt ist, einem Überwachungssegment zugeordnet. So kann aus den Informationen über Objekte in den gröber auflösenden Überwachungsfeldern eindeutig auf die Position entsprechend den feiner auflösenden Überwachungssegmenten geschlossen werden. Es wurde schon erläutert, dass die Überwachungssegmente durch einen Fingerabdruck definiert werden können, d.h. einen binären Vektor, der codiert, welche Überwachungsfelder dort überwachen. Entsprechend kann das Ergebnis der simultanen Auswertung von Überwachungsfeldern als binärer Vektor verstanden werden, in welchem Überwachungssegment ein Objekteingriff erfasst ist. Ein Vergleich der binären Vektoren ergibt das betroffene Überwachungssegment. Das ist selbstverständlich nur ein nicht einschränkendes Beispiel, wie die Zuordnung zu einem Überwachungssegment umsetzbar ist. Anders als bei einem klassischen Schutzfeld, dessen Verletzung sofort zu einer sicherheitsgerichteten Information führt, werden dabei Verletzungen der Überwachungsfelder in einem ersten Schritt ausgewertet, um das betroffene Überwachungssegment zu finden. Daran kann sich dann eine sicherheitsgerichtete Reaktion wie ein Abschaltsignal anschließen, wobei dann das Überwachungssegment als Schutzfeld fungiert. Ebenso sind aber auch andere Auswertungen denkbar, welche die mit verbesserter Auflösung erfasste Information über den Objekteingriff ausnutzen.

Vorzugsweise wird eine Sequenz von Überwachungssegmenten ausgewertet, denen ein erfasstes Objekt zugeordnet wird. Die Sequenz oder Abfolge von Überwachungssegmenten, in denen ein Objekt erfasst ist, liefert Informationen über den Weg eines Objekts insbesondere in der unmittelbaren Vergangenheit, und zwar wegen der erhöhten zweiten Anzahl von Überwachungssegmenten gegenüber der ersten Anzahl Überwachungsfelder mit feinerer Auflösung. Das ermöglicht eine Reaktion beispielsweise in Abhängigkeit von Bewegungsrichtung und Geschwindigkeit, aber auch eine Vorhersage der Bewegung einer Person in der Umgebung einer abzusichernden Gefahrenquelle und damit das Planen entsprechender Maßnahmen zu deren Absicherung, vorzugsweise eine Anpassung, die nur in seltenen Notfällen eine Abschaltung erfordert.

Vorteilhafterweise wird eine Bewegung des Objekts überwacht. Die verfeinerte Auflösung mittels Überwachungssegmenten ermöglicht eine Objektverfolgung. Ein Anwendungsbeispiel ist die Durchgangskontrolle durch Überwachung der Bewegungen an einem Durchgang. Dabei ist ein Durchgang beispielsweise ein durch seitliche Begrenzungen geschaffener Durchgangsbereich, eine Tür oder dergleichen. Denkbar ist aber auch, den Übertritt in verschiedene Zonen eines größeren Produktions- oder sonstigen Bereichs zu überwachen. Der Sensor überwacht, wenn sich Personen von der einen Seite zu der anderen Seite des Durchgangs bewegen, und zählt diese Ereignisse vorzugsweise zugleich. Als Zusatzfunktion kann auch die Tür und deren Stellung oder Öffnungszustand überwacht werden. Meist befindet sich an einem Ende des Durchgangs ein gesicherter Bereich, obwohl das nicht zwingend der Fall sein muss. Dann ist aufgrund des erfindungsgemäßen Sensors stets bekannt, ob jemand den gesicherten Bereich betritt und vorzugsweise auch, wie viele Personen sich dort aufhalten, oder es wird ein Überblick geschaffen, wo sich Personen in einem größeren überwachten Bereich aufhalten. Auch die Erfassung von sonstigen Objekten, etwa mit Personen mitgeführte Wagen oder dergleichen, ist denkbar. Dies gelingt mit dem erfindungsgemäßen Sensor auf eine sehr einfache und kostengünstige Weise. Besondere organisatorische Maßnahmen, Zugangsprozeduren oder aufwändige Schleusen sind dafür nicht erforderlich.

Der Sensor weist bevorzugt einen sicheren Ausgang zur Ausgabe von Informationen über Objekte in Überwachungsfeldern auf. Ein herkömmlicher Sicherheitssensor liefert oft lediglich ein binäres Abschaltsignal. Nach dieser bevorzugten Ausführungsform ist vorgesehen, die Informationen auszugeben, in welchen Überwachungsfeldern Objekte erfasst wurden, vorzugsweise für alle simultan überwachten Überwachungsfelder. Eine Verletzung eines Überwachungsfeldes ist dabei erst einmal nur eine sichere Ausgabegröße, die weiter verarbeitet wird, jedoch nicht wie herkömmlich bei Schutzfeldern direkt in einer sicherheitsgerichteten Reaktion mündet. Selbstverständlich kann aber das Ergebnis weiterer Auswertungen eine solche sicherheitsgerichtete Reaktion sein.

Die Auswertungseinheit ist vorzugsweise zumindest teilweise in einer Sicherheitssteuerung implementiert, die über eine sichere Schnittstelle an den sicheren Ausgang angeschlossen ist. Dies lässt sich auch so verstehen, dass der erfindungsgemäße Sensor eine Anordnung aus dem eigentlichen Sensor und einer Erweiterung seiner Anschlüsse und Auswertungskapazität in Form der Sicherheitssteuerung ist. In einer bevorzugten Arbeitsteilung bestimmt der Sensor intern, in welchen Überwachungsfeldern sich Objekte befinden. Das schließt das eigentliche Messverfahren ein, beispielsweise eine Lichtlaufzeitmessung eines Laserscanners. Die weitere Auswertung erfolgt in der Sicherheitssteuerung anhand der ausgegebenen Informationen, beispielsweise eines binären Vektors mit jeweils einem Eintrag je Überwachungsfeld. Andere Aufteilungen sind aber auch denkbar, etwa dass auch noch die feinere Auswertung, in welchen Überwachungssegmenten sich Objekte befinden, intern erfolgt. Alternativ zu einer geteilten Auswertung mit einer Sicherheitssteuerung ist auch eine rein interne Auswertung vorstellbar.

Der Sensor ist vorzugsweise als Laserscanner mit einem Lichtsender zum Aussenden eines Lichtsignals und einer Ablenkeinheit zum periodischen Ablenken des Lichtsignals in dem Überwachungsbereich ausgebildet. Das ist ein in der Sicherheitstechnik häufig eingesetzter Sensor mit großem Überwachungsbereich, der flexibel in Überwachungsfelder und auch Überwachungssegmente unterteilbar ist. Es kommen Laserscanner jeder bekannten Bauart in Betracht, insbesondere solche mit einer Ablenkeinheit in Form eines Drehspiegels oder eines rotierenden Abtastkopfes. Die Auswertungseinheit ist vorzugsweise für eine Abstandsmessung mit einem Lichtlaufzeitverfahren ausgebildet, wobei auch hier alle bekannten Möglichkeiten wie ein Puls-, ein Phasen- oder ein Pulsmittelungsverfahren in Betracht kommen. Statt eines Laserscanners ist als erfindungsgemäßer Sensor auch eine Kamera, insbesondere eine 3D-Kamera, und in Grenzen auch ein Lichtgitter denkbar, besonders wenn es als tastendes Lichtgitter mit einer Entfernungsmessung entsprechende Freiheitsgrade bietet, um Überwachungsfelder zu definieren.

Der Überwachungsbereich ist bevorzugt durch zwei Koordinaten beschrieben, wobei eine erste Gruppe von Überwachungsfeldern den Überwachungsbereich bezüglich der ersten Koordinate und eine zweite Gruppe von Überwachungsfeldern bezüglich der zweiten Koordinate unterteilt. Die Überwachungsfelder weisen dabei eine Geometrie auf, die dazu führt, dass jeweils eine Gruppe den Überwachungsbereich in der zugeordneten Koordinate überdeckt. Lücken sind aber denkbar und werden später noch diskutiert. In der anderen Koordinate haben die Überwachungsfelder vorzugsweise untereinander gleiche Eigenschaften. Die derart gewählten Gruppen von Überwachungsfeldern führen dazu, dass mit einer ersten Gruppe von n Überwachungsfeldern und einer zweiten Gruppe von m Überwachungsfeldern, also einer ersten Anzahl n+m, insgesamt eine zweite Anzahl von bis zu n*m Überwachungssegmenten unterschieden werden können, je nach konkreter Ausgestaltung mit Lücken auch noch einige mehr. Mit Überwachungsbereich ist dabei wie stets nicht zwingend der maximale Sichtbereich gemeint, sondern möglicherweise ein darin gewählter relevanter Teilbereich.

Vorzugsweise weist die erste Gruppe Streifen oder Rechtecke längs der ersten Koordinate und die zweite Gruppe Streifen oder Rechtecke längs der zweiten Koordinate auf. Die Streifen oder Rechtecke stehen vorzugsweise senkrecht zueinander, so dass sich ein Karomuster bildet, dessen Kästchen die Überwachungssegmente sind, aber quer in anderem Winkel stehende Streifen mit entsprechend verzerrten Kästchen sind ebenfalls möglich.

Vorteilhafterweise weist die erste Gruppe Kreise oder Kreisringe und die zweite Gruppe Kreissektoren auf. Die Kreise beziehungsweise Kreisringe unterteilen eine radiale Koordinate, die Kreissektoren oder umgangssprachlich Tortenstücke eine Winkelkoordinate. Damit sind diese Überwachungsfelder gleichsam an die natürlichen Polarkoordinaten eines Laserscanners angepasst, wobei aber einleitend erläutert wurde, dass die Scandaten selbst außen nicht verfügbar sind, und dass, selbst wenn künftige Laserscanner diese Informationen sicher bereitstellen, deren sichere direkte Auswertung ohne Ausnutzen der etablierten Schutzfeldüberwachung ausgesprochen aufwändig wäre. Die Kreisringe umfassen häufig nicht 360°, weil der Sichtwinkel verfügbarer sicherer Laserscanner eher nur etwas mehr als 180° beträgt. Genaugenommen kann es sich also auch bei den Kreisen oder Kreisringen der ersten Gruppe nur um Kreissektoren handeln, die sich aber im Gegensatz zu den Überwachungsfeldern der zweiten Gruppe die Winkelkoordinate nicht aufteilen. Vielmehr überdecken die Kreisringe schon einzeln, bis auf die noch zu erläuternden möglichen Lücken, den relevanten Sichtwinkelbereich.

Die Überwachungsfelder einer Gruppe grenzen bevorzugt jeweils unmittelbar aneinander. Diese Unterteilung ist besonders eingängig. Als ein Beispiel liegen Überwachungsfelder jeweils direkt nebeneinander. In einem weiteren von zahlreichen Beispielen kann das jeweils i-te Überwachungsfeld vollständig von dem i+1-ten Überwachungsfeld überdeckt sein, welches jeweils noch einen nicht überlappenden Rand hinzufügt. Damit sind dieselben Überwachungssegmente unterscheidbar, es müssen lediglich andere Fingerabdrücke ausgewertet werden. Für die Sicherheitstechnik hat die Unterscheidung noch eine besondere Bedeutung, denn unter Umständen ist nur das zweite Beispiel zulässig. Es gibt nämlich in einigen Normen die Forderung, dass sich ein Schutzfeld nur unmittelbar an die Beobachtungsquelle anschließen darf, jedes Schutzfeld also auch die Sichtlinie zum Sensor enthalten muss. Ansonsten könnten Abschattungen aus nicht überwachten Bereichen zu Fehlern führen. Das lässt sich umgehen, indem der Schatten eines jeden Objekts als Objekt gewertet wird. Außerdem ist erfindungsgemäß in den meisten Fällen jeder Punkt von mehreren Schutzfeldern überwacht, so dass es genügt, wenn eines davon die Sichtlinienbedingung erfüllt. Schließlich ist die Erfindung auch nicht auf Anwendungen begrenzt, in denen diese Forderung gilt.

Bevorzugt unterteilen die Überwachungsfelder der ersten Gruppe den Überwachungsbereich bezüglich der ersten Koordinate und/oder die Überwachungsfelder der zweiten Gruppe den Überwachungsbereich bezüglich der zweiten Koordinate nur bis auf mindestens eine Lücke. Diese mehrfach angesprochene Lücke ist sozusagen ein zusätzliches passives Überwachungsfeld und erhöht ohne Mehraufwand die Anzahl möglicher Überwachungssegmente. Dafür wird die Information genutzt, dass keines der Überwachungsfelder einer Gruppe anspricht und folglich das Objekt sich in der Lücke befinden muss. Das setzt natürlich voraus, dass nur entweder Überwachungsfelder der ersten Gruppe oder der zweiten Gruppe an derselben Position eine Lücke aufweisen, ansonsten wird es eine echte Lücke, in der gar nicht überwacht wird.

Vorzugsweise ist zusätzlich zu den Überwachungsfeldern der beiden Gruppen ein weiteres Überwachungsfeld vorgesehen, welches die Hälfte des Überwachungsbereichs abdeckt. Damit kann bei geschickter Auslegung der Überwachungsfelder die zweite Anzahl verdoppelt werden, indem Überwachungssegmente geteilt und die Teilüberwachungssegmente danach unterschieden werden, ob sie mit dem weiteren Überwachungsfeld überlappen oder nicht. Die Hälfte muss nur ungefähr genau erreicht sein, erst eine deutliche Abweichung führt dazu, dass der Vorteil signifikant geringer wird als eine Verdopplung. Außerdem bezieht sich die Hälfte nicht unbedingt auf die Fläche des Überwachungsbereichs, sondern vorzugsweise auf eine der beiden Koordinaten. Das weitere Überwachungsfeld umfasst also beispielsweise ungefähr den halben zu überwachenden Radius oder ungefähr den halben relevanten Sichtwinkel.

Vorzugsweise liegen Überwachungsfelder einer Gruppe geschachtelt übereinander, so dass ein inneres Überwachungsfeld jeweils vollständig mit einem nächsten Überwachungsfeld überlappt und das nächste Überwachungsfeld an beiden Rändern bezüglich der zugeordneten Koordinate übersteht. Die geschachtelte Anordnung ist ein Beispiel für eine Auslegung von Überwachungsfeldern, bei denen mit dem im vorigen Absatz diskutierten weiteren Überwachungsfeld eine Verdopplung der Überwachungssegmente möglich ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2: eine schematische Darstellung eines Laserscanners, der für eine erweiterte Auswertung an eine Sicherheitssteuerung angeschlossen ist;
- Fig.3: eine beispielhafte Darstellung von überlappenden Überwachungsfeldern in zwei Gruppen für Radius und Winkel;
- Fig. 4: eine beispielhafte Darstellung von überlappenden Überwachungsfeldern in zwei Gruppen für eine vertikale und eine horizontale Richtung;
- Fig. 5: eine beispielhafte Darstellung von überlappenden Schutzfeldern ähnlich Figur 3, jedoch zusätzlich mit Lücken ohne Schutzfelder sowie einem zusätzlichen Schutzfeld, das effektiv die Anzahl von unterscheidbaren Überwachungssegmenten verdoppelt;
- Fig. 6: eine beispielhafte Darstellung von überlappenden Schutzfeldern ähnlich Figur 3, jedoch ohne Lücken und mit effektiver Verdopplung der unterscheidbaren Überwachungssegmente in radialer Richtung statt in Winkelrichtung;
- Fig. 7: eine beispielhafte Darstellung von überlappenden Schutzfeldern in zwei Gruppen für eine vertikale und eine horizontale Richtung ähnlich Figur 4, jedoch analog zu Figur 5 zusätzlich mit Lücken ohne Schutzfelder sowie einem zusätzlichen Schutzfeld, das effektiv die Anzahl von unterscheidbaren Überwachungssegmenten verdoppelt;
- Fig. 8: eine Darstellung der überlappenden Schutzfelder gemäß Figur 7 in einem Durchgang mit zwei Personen und deren Wegen;
- Fig. 9: eine Darstellung der überlappenden Schutzfelder gemäß Figur 7 in einem Durchgang mit einer Person, die einen Wagen mitführt; und
- Fig. 10: eine Darstellung wie Figur 9, jedoch mit einer anderen Geometrie des Wagens.

Die Erfindung betrifft eine verbesserte Objekterfassung mit einem sicheren optoelektronischen Sensor. Sie wird nachfolgend an konkreten Ausführungsformen mit einem sicheren Laserscanner beschrieben. Das soll aber nicht einschränkend verstanden werden, denn auch andere optoelektronische Sensoren sind in der Lage, Schutz- oder Überwachungsfelder zu definieren und darin Objekte sicher zu erfassen. Erneut ohne Einschränkung seien Kameras, insbesondere 3D-Kameras etwa nach dem Lichtlaufzeit- oder Stereoprinzip und in Grenzen auch Lichtgitter genannt. Letztere lassen vor allem dann hinreichend flexible Schutzfeldkonfigurationen zu, wenn sie tastend ausgebildet sind, also nicht nur Strahlunterbrechungen detektieren, sondern auch die Entfernung bis zu dem unterbrechenden Objekt messen.

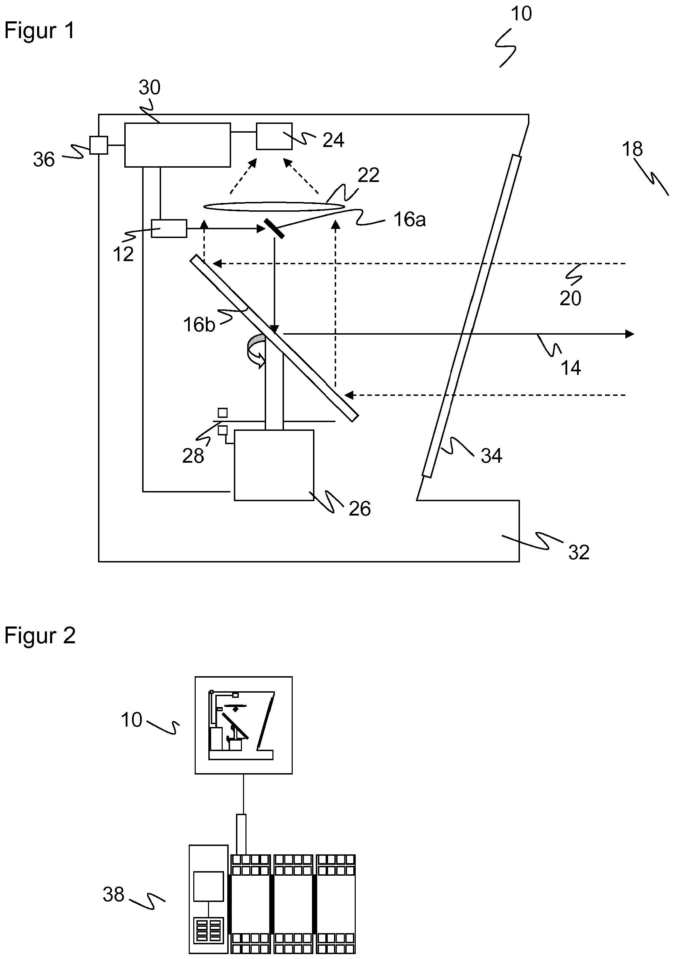

Figur 1 zeigt eine schematische Schnittdarstellung durch einen Laserscanner 10. Der Laserscanner 10 ist vorzugsweise durch Erfüllung der einleitend genannten Normen und die dafür erforderlichen Maßnahmen als Sicherheitslaserscanner ausgebildet. Ein Lichtsender 12, beispielsweise ein Laser, erzeugt einen Lichtstrahl 14, der für ein Puls- oder Pulsmittelungsverfahren einzelne Lichtimpulse aufweist oder dessen Amplitude für ein Phasenverfahren moduliert ist. Der Lichtstrahl 14 wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode.

Die Ablenkeinheit 16b ist hier als Drehspiegel ausgestaltet, die durch Antrieb eines Motors 26 kontinuierlich rotiert. Der von dem Lichtsender 12 erzeugte Lichtstrahl 14 überstreicht somit den durch die Rotationsbewegung erzeugten Überwachungsbereich 18. Abweichend von Figur 1 sind für Laserscanner unterschiedlichste andere Bauformen bekannt, etwa mit biaxialer statt hier koaxialer Anordnung von Lichtsender 12 und Lichtempfänger 24 oder einem drehenden Messkopf, der Lichtsender 12 und/oder Lichtempfänger 24 umfasst oder durch Lichtleiter angekoppelt ist, sowie mit mehreren Messmodulen oder zusätzlicher Beweglichkeit, um einen dreidimensionalen Raumbereich abzutasten.

Die jeweilige Winkelstellung der Ablenkeinheit 16b wird über einen Encoder 28 erfasst. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt beziehungsweise die Phasenverschiebung zwischen ausgesandtem und empfangenem Licht bestimmt. Aus der daraus resultierenden Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Es stehen nun über den Winkel und die Entfernung zweidimensionale Polarkoordinaten aller Objekte in dem Überwachungsbereich 18 zur Verfügung. Alle genannten Funktionskomponenten sind in einem Gehäuse 32 angeordnet, das im Bereich des Lichtaus- und Lichteintritts eine Frontscheibe 34 aufweist.

Die Auswertungseinheit 30 ist in der Lage, die Position der erfassten Objekte mit Überwachungsfeldern zu vergleichen, also Teilbereichen des Überwachungsbereichs 18, deren Geometrie der Auswertungseinheit 30 durch entsprechende Parameter vorgegeben oder konfiguriert ist. Damit erkennt die Auswertungseinheit 30, ob sich ein unzulässiges Objekt in dem jeweiligen Überwachungsfeld befindet. Die Überwachungsfelder werden simultan überwacht, wobei simultan hier als Gegenbegriff zu herkömmlich üblichen umschaltbaren Schutzfeldern zu verstehen ist. Die Auswertung der Objektposition bezüglich der Überwachungsfelder kann dafür parallel durchgeführt werden, aber es genügt, wenn auch ohne oder nur mit teilweiser paralleler Auswertung das Ergebnis innerhalb der Ansprechzeit des Laserscanners vorliegt.

In einem herkömmlichen Laserscanner wäre für das Überwachungsfeld der Begriff Schutzfeld üblich. Wird ein Objekt in einem Schutzfeld erkannt, oder das Schutzfeld verletzt, so erfolgt eine sicherheitsgerichtete Abschaltung (OSSD, Output Signal Switching Device). Dadurch wird beispielsweise ein Nothalt einer angeschlossenen und von dem Laserscanner 10 überwachten Maschine ausgelöst oder ein Fahrzeug abgebremst, auf dem der Laserscanner 10 montiert ist.

Die erfindungsgemäße sichere Auswertung der Überwachungsfelder als solche kann die gleiche sein wie bei einem Schutzfeld. Im Gegensatz zu einer herkömmlichen Schutzfeldverletzung führt aber die Detektion eines Objekts in einem Überwachungsfeld noch nicht unmittelbar zu einer sicherheitsgerichteten Reaktion, obwohl denkbar ist, zumindest einige der Überwachungsfelder auch in diesem Sinne als Schutzfeld zu konfigurieren. Vorzugsweise wird jedoch der Objekteingriff anhand von Überwachungsfeldern, in denen ein Objekt erfasst wurde, noch genauer lokalisiert und analysiert. Das Endergebnis kann dann wiederum eine sicherheitsgerichtete Reaktion sein, aber es ist auch denkbar, vorerst nur Informationen zu sammeln, etwa über Position, Bewegung, Bewegungsrichtung oder Geschwindigkeit eines Objekts.

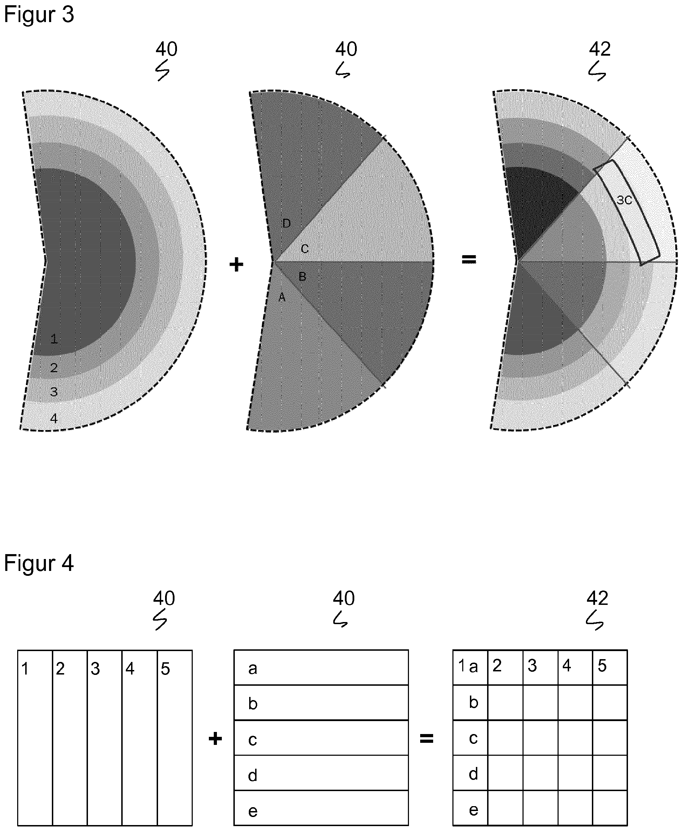

Die weiteren Auswertungen von Überwachungsfeldern, die später unter Bezugnahme auf die Figuren 3 bis 6 näher erläutert werden, können prinzipiell in der Auswertungseinheit 30 durchgeführt werden. Vorzugsweise findet aber zumindest ein Teil der Auswertungen außerhalb des Laserscanners 10 statt. Eine vorteilhafte Aufgabenteilung ist, dass die interne Auswertungseinheit 30 die Winkel- und Abstandsmessungen vornimmt und auswertet, in welchen Überwachungsfeldern ein Objekt erfasst ist. Diese Daten werden dann über einen sicheren Ausgang 36 ausgegeben, der beispielsweise eine EFI-Schnittstelle ist (enhanced function interface). Der Laserscanner 10 selbst ist damit ein sicherer Laserscanner mit simultaner Überwachung mehrerer Überwachungsfelder. Im Prinzip handelt es sich bei dessen Ausgabedaten um einen binären Vektor einer Länge entsprechend der Anzahl ausgewerteter Überwachungsfelder, dessen Eintrag überall dort auf Eins gesetzt ist, wo ein Objekt in einem Überwachungsfeld erkannt wurde. Selbstverständlich kann die entsprechende Information auch in jedem anderen konkreten Ausgabeformat bereitgestellt werden.

Figur 2 zeigt eine Anordnung eines Laserscanners 10 und einer Sicherheitssteuerung 38, die an den sicheren Ausgang 36 angeschlossen ist. Die Sicherheitssteuerung 38 erhält in einer bevorzugten Ausführungsform die jeweiligen Informationen, in welchen Überwachungsfeldern ein Objekt erfasst ist. Die weitere Auswertung ist dann als Sicherheitslogik in der Sicherheitssteuerung 38 implementiert. Über einen der Ausgänge der Sicherheitssteuerung 38 kann als ein mögliches Ergebnis der Auswertung ein sicherheitsgerichtetes Signal an eine überwachte Maschine oder einen Roboter ausgegeben werden. Die Maschine oder der Roboter wird daraufhin langsamer oder weicht auf Arbeitsschritte aus, die erkannte Objekte nicht gefährden können, und nur notfalls wird sie sicherheitsgerichtet abgeschaltet, um insgesamt eine hohe Verfügbarkeit und Produktivität zu erzielen.

Figur 3 zeigt eine erste Ausführungsform einer Konfiguration von zumindest teilweise überlappenden Überwachungsfeldern 40, mit denen die Ortsauflösung der Erfassung eines Objekteingriffs deutlich verbessert werden kann. Dazu werden zwei Gruppen von Überwachungsfeldern 40 gebildet.

Eine linke erste Gruppe umfasst mehrere konzentrische kreis- oder ringförmige Überwachungsfelder 40, die mit 1...4 durchnummeriert sind. Der nicht gezeigte Laserscanner 10 bildet das Zentrum. Die Kreise oder Ringe teilen den verfügbaren Radius von Zentrum bis zur sicheren Reichweite auf. Sie sind nicht vollständig, weil ein sicherer Laserscanner 10 üblicherweise nicht für eine 360°-Überwachung ausgelegt ist, obwohl das auch nicht prinzipiell ausgeschlossen ist. Der dargestellte Winkel ist nur ein Beispiel, Winkel in der Größenordnung von 270° und mehr sind auch mit verfügbaren Geräten erreichbar. Die Anzahl und Breite der Kreise oder Ringe sind nur beispielhaft, insbesondere sind auch Ringe mit unterschiedlicher Dicke denkbar.

Man kann die Darstellung der kreis- oder ringförmigen Überwachungsfelder 1...4 in Figur 3 auf zweierlei Weise verstehen, und das ist beabsichtigt, um gleich zwei Ausführungsbeispiele vorzustellen. Es kann sich nämlich einerseits um konzentrische Kreise mit wachsendem Radius handeln, andererseits um Kreisringe, wobei sich äußere Kreisringe jeweils direkt an den nächsten inneren Kreisring anschließen. Für die zu erläuternde Unterteilung und Erfassung ist beides gleichwertig. Allerdings gibt es in manchen sicherheitstechnischen Normen die Forderung, dass ein Schutzfeld auch die Sichtlinien zu allen Punkten innerhalb des Schutzfeldes enthalten muss, damit ein etwaiges abschattendes Objekt Teil des Schutzfeldes ist. Diese Bedingung ist nur bei Kreisen, nicht aber bei Kreisringen erfüllt. Das heißt aber nicht, dass es nicht auch Anwendungsfälle für eine Konfiguration mit Kreisringen gibt.

Eine mittlere zweite Gruppe weist mehrere Überwachungsfelder in Form von Kreissektoren oder Tortenstücken auf, die mit A...D bezeichnet sind. Die Kreissektoren teilen den überwachten Sichtwinkel auf. Erneut sind Anzahl und Breite nur beispielhaft, und insbesondere ist eine ungleichmäßige Aufteilung des Winkels mit verschieden großen Kreissektoren möglich.

Die Überwachungsfelder 40 in Form von Kreisringen einerseits und von Kreissektoren andererseits decken jeweils den Überwachungsbereich 18 ab, es gibt also einen hier sogar vollständigen Überlapp. In der rechts dargestellten Überlagerung wird also jeder Ort des Überwachungsbereichs 18 doppelt überwacht, nämlich einmal mit einem Kreisring und einmal mit einem Kreissektor. Es entsteht eine Vielzahl von Überwachungssegmenten 42, die sich jeweils dadurch definieren, welcher Kreis oder Kreisring und welcher Kreissektor einander dort überlappen. Ein Überwachungssegment 3C ist als Beispiel hervorgehoben, wo sich der Kreisring 3 und der Kreissektor C überlappen. Wenn die den Radius unterteilende Gruppe links nicht durch Kreisringe, sondern konzentrische Kreise wachsenden Radius' definiert ist, kann der Kreisring 3 ebenso identifiziert werden, nämlich dadurch, dass die Kreise 3 und 4 das Objekt erfassen und die Kreise 1 und 2 nicht. Im Unterschied dazu würde im Kreisring 4 nur noch der Kreis 4 reagieren.

Die Auswertungseinheit 30 des Laserscanners 10 überwacht simultan die acht Überwachungsfelder 40, nämlich die vier Kreisringe 1..4 und die vier Kreissektoren A...D. Dabei führt nun nicht direkt eine Objekterfassung in einem Überwachungsfeld 40 zu einer sicherheitsgerichteten Reaktion. Stattdessen nutzt die Auswertungseinheit 30 selbst oder eine externe Auswertung wie die Sicherheitssteuerung 38 die Information, in welchen Überwachungsfeldern 40 ein Objekt erfasst ist, um das betroffene Überwachungssegment 42 zu finden. Im Beispiel des Überwachungssegments 3C würde ein Objekt sowohl in dem Kreisring 3 als auch dem Kreissektor C erfasst. Es entsteht dadurch eine wesentlich höhere Anzahl von sechzehn effektiv überwachten Überwachungssegmenten 42 im Vergleich zu den ursprünglich nur acht simultan ausgewerteten Überwachungsfeldern 40. Auf Basis dieser genaueren Information über den Objekteingriff wird dann die zu ergreifende Maßnahme bestimmt, nämlich ob eine Bewegung (weiter)verfolgt, eine überwachte Maschine verlangsamt oder zu nicht gefährlichen Arbeitsschritten in ausreichendem Abstand zu dem Objekteingriff veranlasst wird oder ob eine sicherheitsgerichtete Abschaltung erforderlich ist.

Mit zusätzlichen simultan überwachten Überwachungsfeldern 40 lässt sich die Anzahl von Überwachungssegmenten 42 und damit die Auflösung der Orts-, Größen- oder Bewegungsinformation überproportional weiter steigern. So sind mit je acht Kreisringen und Kreissektoren bereits 8*8=64 Überwachungssegmente 42 möglich. Allgemein entstehen durch Aufteilung in zwei Gruppen der Größen n und m, die für jeweils eine Koordinate zuständig sind wie in Figur 3 für Radius beziehungsweise Winkel, aus den *n+m* Überwachungsfelder *n***m* Überwachungssegmente.

Es sei nebenbei bemerkt, dass die simultane Überwachung durch einen Laserscanner 10 nicht ganz unabhängig ist. Wenn ein Objekt in einem nahen Überwachungsfeld 40 erfasst wird, ist aufgrund der Abschattung über dahinter gelegene Überwachungsfelder 42 keine zuverlässige Aussage möglich. Man kann solche Überwachungsfelder 40 vorsichtshalber auch als verletzt ansehen. Jedenfalls sollte die Abschattung in dem Absicherungskonzept berücksichtigt werden.

Die Geometrie der Überwachungsfelder 40 gemäß Figur 3 mit Kreisringen und Kreissektoren ist besonders gut an einen Laserscanner 10 angepasst, aber andere geometrische Formen sind ebenso denkbar.

Figur 4 zeigt ein weiteres Beispiel. Hier sind die Überwachungsfelder 1...5 der ersten Gruppe auf der linken Seite vertikale Streifen, die Überwachungsfelder a..e der zweiten Gruppe in der Mitte horizontale Streifen. Daraus ergeben sich in der Überlagerung auf der rechten Seite wie in einem Karomuster rechteckige oder quadratische Überwachungssegmente 42. Um die Bedingung zu erfüllen, dass jedes Überwachungsfeld 40 auch alle Sichtlinien zum Sensor 10 enthält, können gestaffelt überlappende Rechtecke überwacht werden, die gegebenenfalls auch schräg gestellt oder mit Kreissektoren kombiniert werden. Beispielsweise würde dann die erste Gruppe von den Überwachungsfeldern 1, 1+2, 1+2+3, 1+2+3+4 und 1+2+3+4+5 gebildet, die zweite Gruppe von c, b+c+d und a+b+c+d+e, wobei der Sensor 10 links auf halber Höhe angenommen ist.

Somit illustriert die Figur 3 ein Beispiel mit Polarkoordinaten und die Figur 4 ein Beispiel mit kartesischen Koordinaten. Entsprechendes ist durch Anpassung der Geometrie der Überwachungsfelder 40 für beliebige andere Koordinaten möglich. Dabei unterteilt jede der beiden Gruppen jeweils eine Koordinate. In der anderen Koordinate unterscheiden sich die Überwachungsfelder 40 einer Gruppe vorzugsweise nicht, obwohl auch das denkbar wäre. Am Beispiel der Figur 3 erläutert, decken also die Kreise oder Kreisringe jeweils denselben Winkelbereich und die Kreissektoren denselben Radius ab. Entsprechend sind in Figur 4 die Streifen links jeweils gleich hoch beziehungsweise die Streifen in der Mitte gleich breit.

In den gezeigten Beispielen ist die Unterteilung vollständig und regelmäßig. Es gibt also keinen Bereich der jeweils einer Gruppe zugeordneten Koordinate, der nicht durch mindestens ein Überwachungsfeld 40 abgedeckt ist, und die Überwachungsfelder 40 sind, gemessen an ihrer Koordinate, gleich groß. Der innerste Kreis oder Kreisring 1 ist eine Ausnahme, da er einen größeren Radiusbereich überdeckt als die anderen Kreisringe 2..4. Eine weitere Eigenschaft in den Beispielen der Figur 3 und 4 ist, dass die Überwachungsfelder 40 innerhalb einer Gruppe unmittelbar aneinandergrenzen. Zumindest sofern man zulässt, dass eine Sichtlinie nicht Teil des Überwachungsfeldes 40 ist, kann davon abgewichen werden.

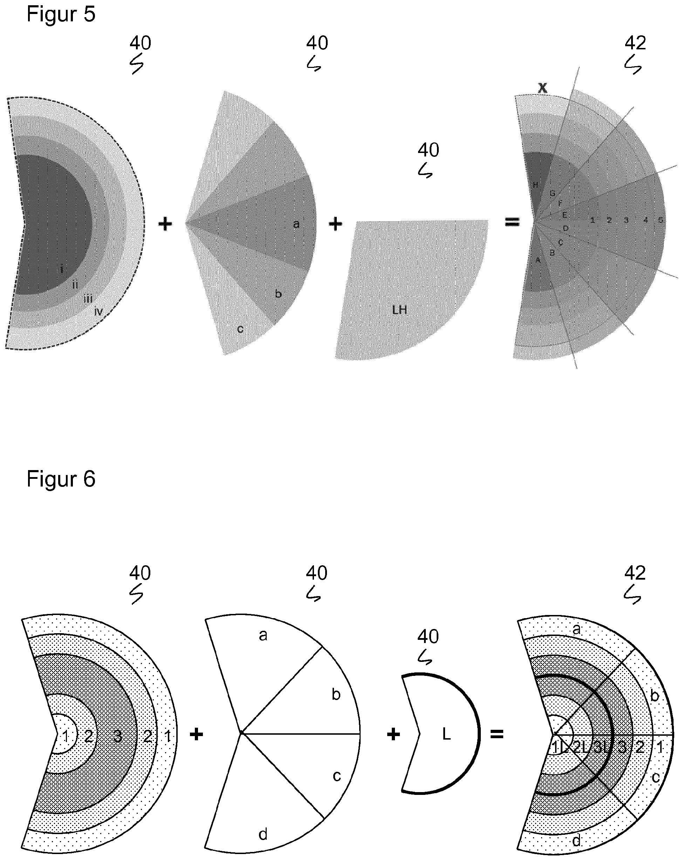

Vollständigkeit oder Regelmäßigkeit der Unterteilung sind nicht erforderlich. Eine unregelmäßige Aufteilung, wie schon im Beispiel des innersten Kreisrings 1 in Figur 3 zu sehen, übersetzt sich direkt in entsprechend unterschiedliche Überwachungssegmente 42. Eine unvollständige Unterteilung, die also Lücken aufweist, kann entweder einen uninteressanten Teil des Überwachungsbereichs 18 betreffen, in dem dann keine Überwachungssegmente 42 definiert sind. Lücken können aber sogar, wie sogleich anhand der Figur 5 erläutert, die Anzahl der Überwachungssegmente 42 bei gleichbleibender Anzahl von Überwachungsfeldern 40 noch erhöhen.

Figur 5 zeigt eine weitere beispielhafte Konfiguration von Überwachungsfeldern 40, anhand derer gleich mehrere vorteilhafte Modifikationen erläutert werden sollen, die auch einzeln und keinesfalls nur in dieser Kombination möglich sind. Als erste Gruppe sind links wie in Figur 3 vier Kreise oder Kreisringe i..iv definiert. An dieser Stelle kann man sich einen weiteren äußeren Kreis oder Kreisring vorstellen, der aber sozusagen virtuell ist, weil dort nur eine Lücke besteht und kein Überwachungsfeld 40 definiert ist, und der erst später verständlich wird.

In der Mitte links werden Kreissektoren a..c dargestellt. Im Unterschied zu Figur 3 überdecken die Kreissektoren a..c gemeinsam nicht den gesamten verfügbaren Sichtwinkel, sondern lassen zu beiden Seiten außen einen Winkelbereich frei. Das entspricht, bezogen auf die Winkelkoordinate, einer Lücke analog dem äußersten Kreisring, der eine Lücke in der Radiuskoordinate ist und im vorigen Absatz erläutert wurde. Die Kreissektoren liegen außerdem nicht nebeneinander wie in Figur 3, sondern sind ineinander geschachtelt: Der innerste Kreissektor a wird von dem nächsten Kreissektor b vollständig überlappt, mit zusätzlichen Rändern zu beiden Seiten, und diese Verhältnisse finden sich genauso zwischen den Kreissektoren b und c.

Schließlich kommt zu den beiden Gruppen von Überwachungsfeldern 40 in der Mitte rechts noch ein weiteres Überwachungsfeld LH hinzu, welches die gesamte Reichweite und den halben Sichtwinkel, folglich insgesamt den halben Überwachungsbereich 18 abdeckt.

Diese Konfiguration kommt mit vier Kreisen oder Kreisringen, i..iv, drei Kreissektoren a..c und einem weiteren Überwachungsfeld LH, also insgesamt acht Überwachungsfeldern 40 aus. Wie die Überlagerung auf der rechten Seite der Figur 5 zeigt, können damit jedoch sogar 39 Überwachungssegmente 42 unterschieden werde, was deutlich mehr ist als die 4*4 Überwachungsfelder 40 gemäß Figur 3.

Diese Erhöhung hat mehrere Gründe. Zum einen ist effektiv jeweils ein nicht überwachter fünfter Kreis oder Kreisring und ein nicht überwachter vierter Kreissektor hinzugekommen. Außerdem werden die Überwachungssegmente 42 nochmals durch das weitere Überwachungsfeld LH halbiert, was durch die geschickte Wahl der ineinander geschachtelten Kreissektoren a..c möglich ist.

Die Funktionsweise wird am besten anhand der Erkennung eines Objekts in konkreten Überwachungssegmenten 42 verständlich. Für die Überwachungssegmente 1B..4G unterscheidet sich das Vorgehen kaum von Figur 3. Es spricht jeweils ein für das jeweilige Überwachungssegment 42 charakteristisches Paar eines Kreisrings i..iv und eines Kreissektors a..c an. Zusätzlich kann anhand des weiteren Überwachungssegments LH unterschieden werden, ob der Objekteingriff oben in den Kreissektoren E..G oder unten in den Kreissektoren B..D erfolgte, so dass letztlich durch das weitere Überwachungssegment LH die Winkelauflösung verdoppelt ist.

In den Überwachungssegmenten A1..A4 und H1..H4 wird ein Objekt nur durch die Kreise oder Kreisringe i...iv erfasst. Das gleichzeitige Ausbleiben einer Detektion in den Kreissektoren a..c, die hier eine Lücke aufweisen, liefert effektiv die gleiche Information, als gäbe es hier einen weiteren Kreissektor. Wiederum unterscheidet das weitere Überwachungsfeld LH die Gruppen A und H voneinander.

Analog wird in den Überwachungssegmenten 5A..5H des nicht aktiv überwachten Kreisrings 5 ein Objekt nur in den jeweiligen Kreissektoren a..c erfasst, und das Ausbleiben einer Information von einem der Kreise oder Kreisringe i..iv lässt darauf schließen, dass sich das Objekt in dem Kreisring 5 befinden muss. Wiederum differenziert das weitere Überwachungsfeld LH zwischen 5A..5D einerseits und 5E..5H andererseits. Eine Besonderheit sind die Überwachungssegmente 5A und 5H. Hier haben sowohl die Kreisringe i..iv als auch die Kreissektoren a..c eine Lücke. Bei dem Überwachungssegment 5A kann das noch aufgefangen werden, weil hier das weitere Überwachungsfeld LH eine sichere Objektdetektion garantiert. Ein Objekt, das ausschließlich von dem weiteren Überwachungsfeld detektiert wird, lässt sich so in dem Überwachungssegment 5A lokalisieren. In dem Überwachungssegment 5H dagegen überlappen nur noch Lücken. Es kann nicht unterschieden werden, ob gar kein Objekt vorhanden ist oder ob es sich in dem Überwachungssegment 5H befindet. Deshalb ist dieses Überwachungssegment 5H tatsächlich nicht verfügbar und mit einem X markiert, womit sich auch die Gesamtzahl von (4+1)*(3+1)*2-1=39 Überwachungssegmenten 42 erklärt.

Figur 6 zeigt eine weitere beispielhafte Konfiguration von Überwachungsfeldern 40. Während in Figur 5 die Kreissektoren ineinander geschachtelt sind und das weitere Überwachungsfeld LH dadurch die Winkelauflösung verdoppelt, sind hier die Kreisringe geschachtelt, und ein anders gestaltetes weiteres Überwachungsfeld L verdoppelt die radiale Auflösung. Lücken sind der einfacheren Erläuterung halber hier nicht vorgesehen, könnten aber wie in Figur 5 ergänzt werden, um noch mehr Überwachungssegmente 42 zu erhalten.

Wie durch gleichartige Schraffur und Nummerierung angedeutet, ist auf der linken Seite der Figur 6 zunächst ein innerer Kreisring 3 vorgesehen, der von dem nächsten Kreisring 2 vollständig überlappt wird, wobei innen und außen Randbereiche überstehen, und entsprechendes gilt für das Verhältnis des Kreisrings 2 zum äußeren Kreisring 1. Das ist, auf den Radius bezogen, das Äquivalent der auf den Winkel bezogenen Verschachtelung der Kreissektoren a...c in Figur 5. Zu beachten ist, dass die inneren Kreisringe 2..3 Bereiche zum Sensor 10 hin freilassen, in denen die direkte Sichtlinie nicht durch dasselbe Überwachungsfeld 40 überwacht wird, was in manchen Sicherheitsanwendungen unzulässig sein könnte.

Die Kreissektoren a..d der Figur 6 entsprechen der Figur 3. Das weitere Überwachungsfeld L überdeckt alle Winkel, jedoch nur den halben Radius der maximalen Reichweite. Das weitere Überwachungsfeld L erlaubt, zwischen inneren und äußeren Radiusbereichen zu unterscheiden, und verdoppelt damit die radiale Auflösung. So entstehen aus acht Überwachungsfeldern 40, nämlich drei Kreisringen, vier Kreissektoren und einem weiteren Überwachungsfeld, insgesamt 3*4*2=24 Überwachungssegmente.

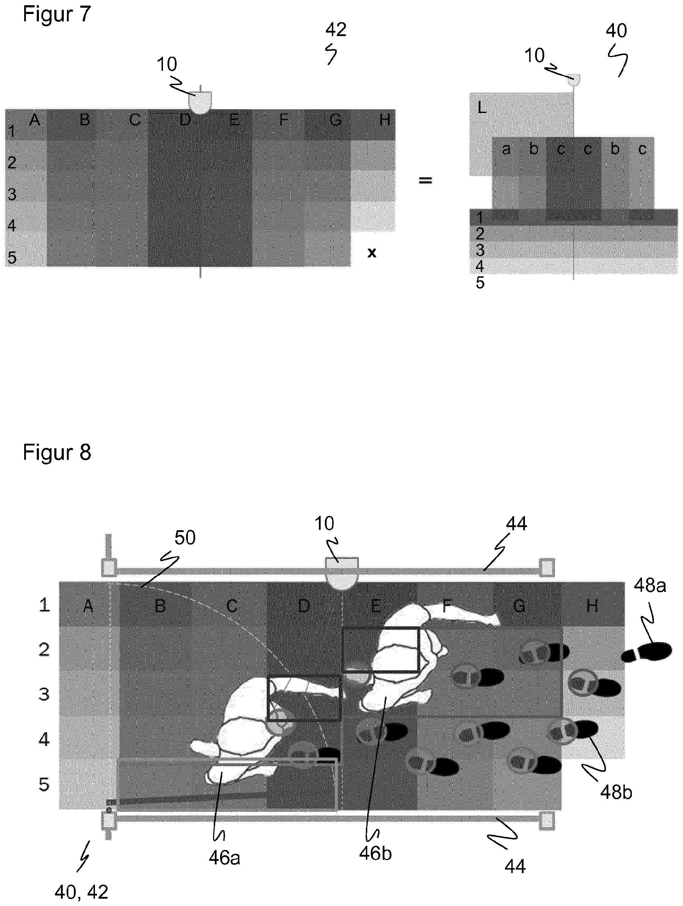

Figur 7 zeigt, dass sich die soeben zu Figur 5 und 6 erläuterten Konzepte nicht nur für Kreisgeometrien eignen, sondern auch für ein horizontales und vertikales, quasikartesisches Raster. Während in anderen Worten die Figuren 5 und 6 Erweiterungen zu Figur 3 darstellen, betrifft Figur 7 entsprechende Erweiterungen der Figur 4.

Wie rechts in Figur 7 zu erkennen, werden dazu zunächst zwei Gruppen von Überwachungsfeldern 40 gebildet, nämlich horizontale Überwachungsfelder 1...5 und vertikale Überwachungsfelder a..c. Die vertikalen Überwachungsfelder a..c sind analog den Kreissektoren a..c der Figur 5 ineinander geschachtelt. Am linken und rechten Rand neben den vertikalen Überwachungsfeldern a..c finden sich nicht überwachte Bereiche. Auch das Überwachungsfeld 5 ist ein nicht überwachter Bereich. Zusätzlich zu den beiden Gruppen ist noch ein weiteres Überwachungsfeld L definiert, welches die linke Hälfte des Überwachungsbereichs 18 überdeckt.

Man kann demnach die Figur 7 als kartesisches Gegenstück zu Figur 5 auffassen, und ganz analog werden hier mit acht Überwachungsfeldern 40, nämlich einer ersten Gruppe von vier überlappenden horizontalen Rechtecken, einer zweiten Gruppe von drei zentrierten, ineinander geschachtelten vertikalen Rechtecken und einem Indikatorfeld für eine bestimmte Hälfte des Überwachungsbereichs, hier die linke Hälfte, insgesamt 39 Überwachungssegmente 42 gebildet. Die Überwachungssegmente zwischen B1 und F4 werden erkannt, weil die jeweils zuständigen dort überlappenden horizontalen und vertikalen Überwachungsfelder 40 zugleich ein Objekt erkennen. In den Überwachungssegmenten A1-A4 und H1-H4 ergibt sich die horizontale Information aus dem Ausbleiben einer Erkennung in den vertikalen Überwachungsfeldern 40, entsprechend in A5 bis G5 die vertikale Information aus dem Ausbleiben einer Erkennung in den horizontalen Überwachungsfeldern 40. Das Überwachungssegment H5 wird nicht überwacht, deshalb sind es 39 und nicht 40 Überwachungssegmente 42. Durch zusätzliche Überwachungsfelder 40 kann die Auflösung weiter verbessert werden.

Figur 8 zeigt ein Anwendungsbeispiel für die Konfiguration gemäß Figur 7 zur Durchgangskontrolle. Prinzipiell könnte ein Durchgang auch durch eine andere Konfiguration überwacht werden, einschließlich radialer Konfigurationen gemäß Figur 3, 5 oder 6, aber meist ist eine rechteckige Geometrie besser an einen Durchgang angepasst. Der Durchgangsbereich wird hier durch eine mechanische Begrenzung 44 gebildet, wobei dies nicht notwendig der Fall sein muss, da es auch Anwendungen gibt, in denen der Durchgang an freien oder nur zum Teil begrenzten Flächen überwacht werden soll. Der Sensor 10 wird entsprechend der Konfiguration der Figur 7 mittig montiert, wobei dies mit anderen Konfigurationen abweichender Geometrien und/oder Überlappungen auch anders vorstellbar ist. In dem Durchgang oder an dessen Enden können sich eine oder mehrere Türen befinden. In Figur 8 reichen die Überwachungssegmente 42 vorteilhaft etwas über den Durchgangsbereich zwischen der mechanischen Begrenzung 44 hinaus.

Wenn sich Personen 46a-b in dem Durchgangsbereich aufhalten, so lässt sich mit den Überwachungssegmenten 42 nicht nur deren aktuelle Position bestimmen, sondern auch ihr Weg verfolgen, wie durch Fußabdrücke 48a-b angedeutet. Dazu wird die Sequenz von Überwachungssegmenten 42 ausgewertet, in denen ein Objekteingriff erkannt wurde. Damit ist auch unterscheidbar, ob es sich um eine oder wie in Figur 8 mehrere Personen 46a-b handelt, denn es sprechen gleichzeitig Überwachungssegmente 42 an, in denen eine Einzelperson sich nicht zum selben Zeitpunkt aufhalten könnte. Die Unterscheidung wird erleichtert, wenn die mechanische Begrenzung 44 für einen relativ schmalen Durchgang sorgt, in dem sich Personen nur hintereinander bewegen.

Die Überwachungsfelder 40 können beispielsweise auf Höhe der Beine, Waden oder Füße einer Person angeordnet werden. Jeder Schritt verletzt eines oder mehrere Überwachungssegmente 42. Dabei zeigen Schritte ein bestimmtes Muster, etwa dass ein Schritt kurz nach dem anderen zu erwarten ist, und zwar nur wenige Überwachungssegmente 42 weiter in horizontaler und alternierend etwas näher an und etwas weiter weg von dem Sensor 10 in vertikaler Richtung. Dabei ist zu beachten, dass ein Objekt in einem Überwachungssegment 42 näher an dem Sensor 10 die dahinterliegenden Überwachungssegmente 42 abschattet. Das ist aber nicht kritisch, weil im Verlauf der Bewegung jede Person 46a-b sich erst an den Sensor 10 annähert und sich dann wieder entfernt. Diese unterschiedlichen Perspektiven des Sensors 10 auf die Personen 46a-b erlauben dennoch eine Erfassung jeder einzelnen Person 46a-b. Möglicherweise scheitert der Sensor 10 bei nur relativ wenigen Überwachungssegmenten 42 noch an einer sicheren Unterscheidung von dicht hintereinander gehenden Personen 46a-b. Dann wird aber zumindest erkannt, dass es nicht nur eine Person 46a-b ist, und es erfolgt eine Fehlermeldung beispielsweise mit der Aufforderung, den Durchgang zur Eintrittsseite hin zu verlassen und mit größerem Abstand zwischen den Personen 46a-b erneut zu betreten.

In vorteilhafter Weiterbildung kann der Sensor 10 auch eine Tür 50 überwachen, die mit ihrem Öffnungskreis eingezeichnet ist. Im geschlossenen Zustand sollte die Tür 50 in den Überwachungssegmenten A1-A5 erfasst sein. In der Öffnungsbewegung werden andere Überwachungssegmente 42 von der Tür 50 überstrichen, wie der Öffnungskreis erkennen lässt. So werden noch alle Überwachungssegmente B1-B5 betroffen sein, dann aber erst einmal nur die oberen Überwachungssegmente C1 bis C3, aber noch nicht die unteren Überwachungssegmente C4-C5. Dann wird D2 getroffen, D1 aber nicht, und kurz werden darauf mit Bewegung in D3 die Überwachungssegmente A1-A5, B1-B3 und C2 wieder frei, wobei dort eine Person 46 hinter der Tür 50 erfasst sein könnte. In der Endposition deckt die Tür 50 die Überwachungssegmente A5-D5 ab, woran die offene Türposition erkennbar ist. Es ist klar, dass die konkrete Sequenz der betroffenen Überwachungssegmente 42 von der jeweiligen Tür 50, deren Position sowie der nur beispielhaften Konfiguration der Überwachungsfelder 40 abhängt.

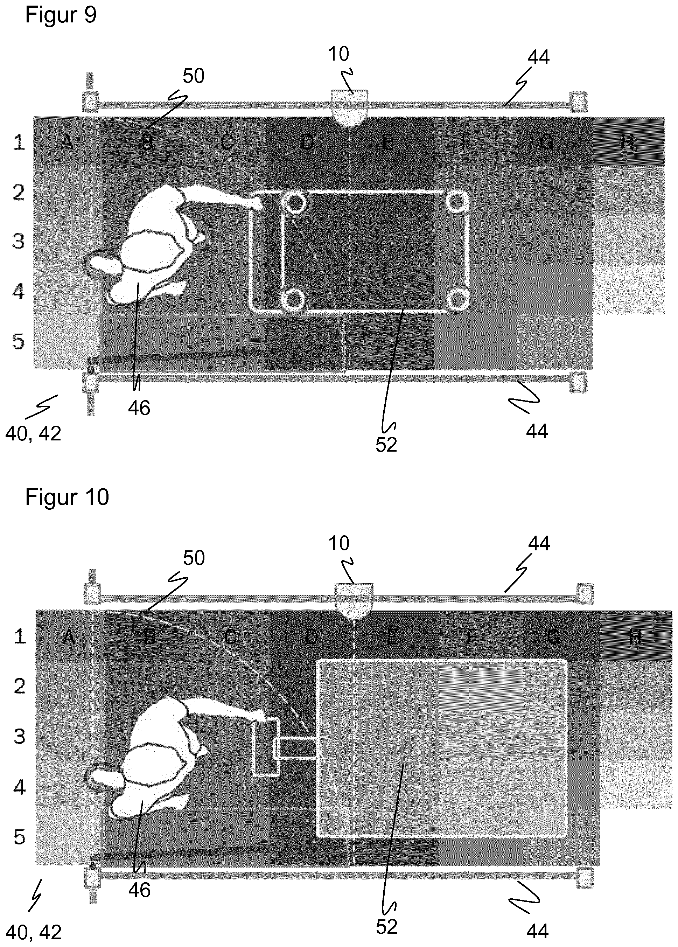

Figur 9 zeigt nochmals den Durchgang gemäß Figur 8 mit der Konfiguration von Überwachungsfeldern 40 und Überwachungssegmenten 42 gemäß Figur 7. Hier führt die Person 46 einen Gegenstand mit sich, insbesondere einen Wagen 52, eine Palette oder dergleichen. Durch Auswertung der Überwachungssegmente 42, in denen jeweils ein Objekt erfasst ist, kann auch ein solcher Wagen 52 identifiziert werden. Dazu eignen sich hier beispielsweise die vier Ecken des Wagens 52. Das lässt sich auch mit der durch die Überwachungssegmente 42 gegebenen Auflösung differenzieren, wie ein weiteres Beispiel eines anderen Wagens 52 in Figur 10 illustriert. Zudem ist möglich, wie mehrfach angesprochen, die Anzahl von Überwachungssegmenten 42 durch zusätzliche Überwachungsfelder 40 auch deutlich zu erhöhen.

Zusätzlich zu der reinen Überwachung, ob und wie viele Personen 46 sich durch den Durchgang bewegen, ist auch denkbar, ungewöhnliches Verhalten zu erkennen und gegebenenfalls mit einer Warnung oder einer Sicherheitsmaßnahme zu reagieren. So ist es angesichts der Körperbreite und der Arme einer Person 46 unwahrscheinlich, dass sich deren Füße 46 häufig in den horizontalen Bereichen 1 und 5 nahe an der Begrenzung 44 befinden.

Neben der Auflösungserhöhung durch mehr Überwachungsfelder 40 ist eine weitere Möglichkeit, die Erfassung zu verbessern, das Zusammenführen der Erfassung mehrerer Sensoren 10, beispielsweise je eines Laserscanners zu beiden Seiten des Durchgangs insbesondere auf verschiedener Höhe. Das eignet sich besonders für den Fall eines Durchgangs mit komplexerer Geometrie wie einer L-Form, wobei das auch noch mit nur einem Laserscanner im Knickpunkt der L-Form denkbar ist.

Erfindungsgemäß wird somit durch zwei Gruppen, die jeweils eine Koordinate unterteilen, die effektive Anzahl von Überwachungssegmenten 42 gegenüber simultan überwachten Überwachungsfeldern 40 deutlich von n+m auf n*m gesteigert. Wie anhand der Figuren 5 und 6 erläutert, lässt sich dies durch Lücken beziehungsweise nur von einer Gruppe erfasste Bereiche und/oder ein weiteres Überlappungsfeld, welches bei geschickter Auslegung der Überwachungsfelder 40 die Überwachungssegmente 42 nochmals halbiert, noch weiter steigern. So werden die verfügbaren simultan überwachten Überwachungsfelder 40, die wegen des Auswertungsaufwandes nur in begrenzter Anzahl verfügbar sind, optimal für eine feinere Auflösung genutzt.

Auch wenn die Unterteilung in zwei Gruppen, die jeweils einer Koordinate zugeordnet sind, ein besonders handhabbares Vorgehen ist, so ist die Erfindung darauf nicht eingeschränkt. Es gibt auch weitere Konfigurationen einfach, vielfach oder nicht überlappender Überwachungsfelder 40, die eine Unterscheidung einer größeren Anzahl von Überwachungssegmenten 42 zulassen.

## Patentansprüche

1. Optoelektronischer Sensor (10) zur sicheren Erfassung von Objekten in einem Überwachungsbereich (18), der einen Lichtempfänger (24) zum Erzeugen eines Empfangssignals aus Empfangslicht (20) aus dem Überwachungsbereich (18) und eine Auswertungseinheit (30) aufweist, die dafür ausgebildet ist, simultan eine erste Anzahl von Überwachungsfeldern (40) zu überwachen, wobei ein Überwachungsfeld (40) ein konfigurierter Teilbereich des Überwachungsbereichs (18) ist, und dazu anhand des Empfangssignals festzustellen, in welchem Überwachungsfeld (40) oder welchen Überwachungsfeldern (40) sich ein Objekt befindet, indem die Position der erfassten Objekte mit den Überwachungsfeldern (40) verglichen wird,
**dadurch gekennzeichnet,**
**dass** die Überwachungsfelder (40) einander zumindest teilweise überlappen, so dass eine zweite Anzahl größer der ersten Anzahl von Überwachungssegmenten (42) entsteht, wobei sich die Überwachungssegmente (42) voneinander dadurch unterscheiden, welche Überwachungsfelder (40) dort überlappen, und dass ein erfasstes Objekt anhand der Überwachungsfelder (40), in denen ein Objekt erkannt ist, einem Überwachungssegment (42) zugeordnet wird.

2. Sensor (10) nach Anspruch 1,
wobei eine Sequenz von Überwachungssegmenten (42) ausgewertet wird, denen ein erfasstes Objekt zugeordnet wird.

3. Sensor (10) nach Anspruch 2,
wobei eine Bewegung des Objekts überwacht wird, insbesondere eine Bewegung durch einen Durchgang.

4. Sensor (10) nach einem der vorhergehenden Ansprüche,
der einen sicheren Ausgang (36) zur Ausgabe von Informationen über Objekte in Überwachungsfeldern (40) aufweist.

5. Sensor (10) nach Anspruch 4,
wobei die Auswertungseinheit (30) zumindest teilweise in einer Sicherheitssteuerung (38) implementiert ist, die über eine sichere Schnittstelle an den sicheren Ausgang (36) angeschlossen ist.

6. Sensor (10) nach einem der vorhergehenden Ansprüche,
der als Laserscanner mit einem Lichtsender (12) zum Aussenden eines Lichtsignals (14) und einer Ablenkeinheit (16b) zum periodischen Ablenken des Lichtsignals (14) in dem Überwachungsbereich (18) ausgebildet ist.

7. Sensor (10) nach einem der vorhergehenden Ansprüche,
wobei der Überwachungsbereich (18) durch zwei Koordinaten beschrieben ist, und wobei eine erste Gruppe von Überwachungsfeldern (40) den Überwachungsbereich (18) bezüglich der ersten Koordinate und eine zweite Gruppe von Überwachungsfeldern (40) bezüglich der zweiten Koordinate unterteilt.

8. Sensor (10) nach Anspruch 7,
wobei die erste Gruppe Streifen oder Rechtecke längs der ersten Koordinate und die zweite Gruppe Streifen oder Rechtecke längs der zweiten Koordinate aufweist.

9. Sensor (10) nach Anspruch 7,
wobei die erste Gruppe Kreise oder Kreisringe und die zweite Gruppe Kreissektoren aufweist.

10. Sensor (10) nach einem der Ansprüche 7 bis 9,
wobei die Überwachungsfelder einer Gruppe jeweils unmittelbar aneinandergrenzen.

11. Sensor (10) nach einem der Ansprüche 7 bis 10,
wobei die Überwachungsfelder (40) der ersten Gruppe den Überwachungsbereich (18) bezüglich der ersten Koordinate und/oder die Überwachungsfelder (40) der zweiten Gruppe den Überwachungsbereich (18) bezüglich der zweiten Koordinate nur bis auf mindestens eine Lücke unterteilen.

12. Sensor (10) nach einem der Ansprüche 7 bis 11,
wobei zusätzlich zu den Überwachungsfeldern (40) der beiden Gruppen ein weiteres Überwachungsfeld (40, LH, L) vorgesehen ist, welches die Hälfte des Überwachungsbereichs (18) abdeckt.

13. Sensor (10) nach einem der Ansprüche 7 bis 12,
wobei Überwachungsfelder (40) einer Gruppe geschachtelt übereinander liegen, so dass ein inneres Überwachungsfeld (40) jeweils vollständig mit einem nächsten Überwachungsfeld (40) überlappt und das nächste Überwachungsfeld (40) an beiden Rändern bezüglich der zugeordneten Koordinate übersteht.

14. Verfahren zur sicheren Erfassung von Objekten in einem Überwachungsbereich (18), bei dem Überwachungsfelder (40) als Teilbereiche des Überwachungsbereichs (18) konfiguriert werden und simultan eine erste Anzahl von Überwachungsfeldern (40) überwacht, wobei ein Überwachungsfeld (40) ein konfigurierter Teilbereich des Überwachungsbereichs (18) ist, und dazu anhand eines Empfangssignals aus Licht aus dem Überwachungsbereich (18) festgestellt wird, in welchem Überwachungsfeld (40) oder welchen Überwachungsfeldern (40) sich ein Objekt befindet, indem die Position der erfassten Objekte mit den Überwachungsfeldern (40) verglichen wird,
**dadurch gekennzeichnet,**
**dass** die Überwachungsfelder (40) einander zumindest teilweise überlappen, so dass eine zweite Anzahl größer der ersten Anzahl von Überwachungssegmenten (42) entsteht, wobei sich die Überwachungssegmente (42) voneinander dadurch unterscheiden, welche Überwachungsfelder (40) dort überlappen, und dass ein erfasstes Objekt anhand der Überwachungsfelder (40), in denen ein Objekt erkannt ist, einem Überwachungssegment (42) zugeordnet wird.

## Claims

1. An optoelectronic sensor (10) for the safe detection of objects in a monitored area (18), the optoelectronic sensor (10) comprising a light receiver (24) for generating a reception signal from received light (20) from the monitored area (18) and an evaluation unit (30) which is configured to simultaneously monitor a first number of monitored fields (40), wherein a monitored field (40) is a configured subarea of the monitored area (18), and to determine, on the basis of the received signal, in which monitored field (40) or which monitored fields (40) an object is located by comparing the position of the detected objects with the monitored fields (40),
**characterized in that** the monitored fields (40) overlap each other at least partially, so that a second number of monitored segments (42) greater than the first number is generated, wherein the monitored segments (42) differ from each other by the identity of the monitored fields (40) overlapping therein, and **in that** a detected object is assigned to a monitored segment (42) on the basis of the monitored fields (40) in which an object is detected.

2. The sensor (10) according to claim 1,
wherein a sequence of monitored segments (42) to which a detected object is assigned is evaluated.

3. The sensor (10) according to claim 2,
wherein a movement of the object is monitored, in particular a movement through a passageway.

4. The sensor (10) according to any of the preceding claims,
which has a safe output (36) for outputting information about objects in monitored fields (40).

5. The sensor (10) according to claim 4,
wherein the evaluation unit (30) is at least partially implemented in a safety controller (38) which is connected to the safe output (36) via a safe interface.

6. The sensor (10) according to any of the preceding claims,
which is configured as a laser scanner with a light transmitter (12) for transmitting a light signal (14) and a deflection unit (16b) for periodically deflecting the light signal (14) in the monitored area (18).

7. The sensor (10) according to any of the preceding claims,
wherein the monitored area (18) is described by two coordinates, and wherein a first group of monitored fields (40) divides the monitored area (18) with respect to the first coordinate and a second group of monitored fields (40) with respect to the second coordinate.

8. The sensor (10) according to claim 7,
where the first group has stripes or rectangles along the first coordinate and the second group has stripes or rectangles along the second coordinate.

9. The sensor (10) according to claim 7,
where the first group has circles or circular rings and the second group has circular sectors.

10. The sensor (10) according to any of claims 7 to 9,
where the monitored fields of a group are directly adjacent to each other.

11. The sensor (10) according to any of claims 7 to 10,
wherein the monitored fields (40) of the first group subdivide the monitored area (18) with respect to the first coordinate and/or the monitored fields (40) of the second group subdivide the monitored area (18) with respect to the second coordinate only up to at least one gap.

12. The sensor (10) according to one of claims 7 to 11,
wherein in addition to the monitored fields (40) of the two groups, a further monitored field (40, LH, L) is provided, which covers half of the monitored area (18).

13. The sensor (10) according to any of claims 7 to 12,
wherein monitored fields (40) of a group lie nested one above the other, so that an inner monitored field (40) overlaps completely with a next monitored field (40) and the next monitored field (40) protrudes at both edges with respect to the associated coordinate.

14. A method for the safe detection of objects in a monitored area (18), wherein monitored fields (40) are configured as sub-areas of the monitored area (18) and a first number of monitored fields (40) are simultaneously monitored, a monitored field (40) being a configured subarea of the monitored area (18), and wherein it is determined by means of a received signal from light from the monitored area (18) in which monitored field (40) or which monitored fields (40) an object is located by comparing the position of the detected objects with the monitored fields (40),
**characterized in that** the monitored fields (40) overlap each other at least partially, so that a second number of monitored segments (42) greater than the first number is generated, wherein the monitored segments (42) differ from each other by the identity of the monitored fields (40) overlapping therein, and **in that** a detected object is assigned to a monitored segment (42) on the basis of the monitored fields (40) in which an object is detected.

## Revendications

1. Capteur optoélectronique (10) pour la détection sécurisée d'objets dans une zone à surveiller (18), comportant un récepteur de lumière (24) pour générer un signal de réception à partir d'une lumière de réception (20) provenant de la zone à surveiller (18), et une unité d'évaluation (30) qui est réalisée pour surveiller simultanément un premier nombre de champs de surveillance (40), un champ de surveillance (40) étant une zone partielle configurée de la zone à surveiller (18), et pour constater à cet effet, sur la base du signal de réception, dans quel champ de surveillance (40) ou dans quels champs de surveillance (40) se trouve un objet, en comparant la position des objets détectés avec les champs de surveillance (40),
**caractérisé en ce que**
les champs de surveillance (40) se chevauchent au moins partiellement, de sorte qu'il se forme un second nombre supérieur au premier nombre de segments de surveillance (42), les segments de surveillance (42) se distinguant les uns des autres par le fait de savoir quels des champs de surveillance (40) s'y chevauchent, et **en ce que**
un objet détecté est affecté à un segment de surveillance (42) sur la base des champs de surveillance (40) dans lesquels un objet est reconnu.

2. Capteur (10) selon la revendication 1,
dans lequel une séquence de segments de surveillance (42) auxquels est affecté un objet détecté est évaluée.

3. Capteur (10) selon la revendication 2,
dans lequel un mouvement de l'objet est surveillé, en particulier un mouvement à travers un passage.

4. Capteur (10) selon l'une des revendications précédentes,
comprenant une sortie sécurisée (36) pour émettre des informations relatives à des objets dans des champs de surveillance (40).

5. Capteur (10) selon la revendication 4,
dans lequel l'unité d'évaluation (30) est au moins partiellement implémentée dans une commande de sécurité (38) qui est connectée à la sortie sécurisée (36) par une interface sécurisée.

6. Capteur (10) selon l'une des revendications précédentes,
réalisé sous la forme d'un scanner laser comportant un émetteur de lumière (12) pour émettre un signal lumineux (14) et une unité de déviation (16b) pour dévier périodiquement le signal lumineux (14) dans la zone à surveiller (18).

7. Capteur (10) selon l'une des revendications précédentes,
dans lequel la zone à surveiller (18) est décrite par deux coordonnées, et un premier groupe de champs de surveillance (40) subdivise la zone à surveiller (18) par rapport à la première coordonnée, et un second groupe de champs de surveillance (40) la subdivise par rapport à la seconde coordonnée.

8. Capteur (10) selon la revendication 7,
dans lequel le premier groupe comprend des bandes ou des rectangles le long de la première coordonnée, et le second groupe comprend des bandes ou des rectangles le long de la seconde coordonnée.

9. Capteur (10) selon la revendication 7,
dans lequel le premier groupe comprend des cercles ou des anneaux circulaires, et le second groupe comprend des secteurs de cercle.

10. Capteur (10) selon l'une des revendications 7 à 9,
dans lequel les champs de surveillance d'un groupe sont chacun immédiatement adjacents les uns aux autres.

11. Capteur (10) selon l'une des revendications 7 à 10,
dans lequel les champs de surveillance (40) du premier groupe subdivisent la zone à surveiller (18) par rapport à la première coordonnée, et/ou les champs de surveillance (40) du second groupe subdivisent la zone à surveiller (18) par rapport à la seconde coordonnée, exception faite seulement d'au moins une lacune.

12. Capteur (10) selon l'une des revendications 7 à 11,
dans lequel, en supplément aux champs de surveillance (40) des deux groupes, il est prévu un autre champ de surveillance (40, LH, L) qui recouvre la moitié de la zone à surveiller (18).

13. Capteur (10) selon l'une des revendications 7 à 12,
dans lequel les champs de surveillance (40) d'un groupe sont imbriqués les uns au-dessus des autres, de sorte qu'un champ de surveillance intérieur (40) chevauche complètement un champ de surveillance suivant respectif (40) et que le champ de surveillance suivant (40) dépasse sur les deux bords par rapport à la coordonnée affectée.

14. Procédé pour la détection sécurisée d'objets dans une zone à surveiller (18), dans lequel, des champs de surveillance (40) étant configurés comme des zones partielles de la zone à surveiller (18), on surveille simultanément un premier nombre de champs de surveillance (40), un champ de surveillance (40) étant une zone partielle configurée de la zone à surveiller (18), et, à cet effet, on constate sur la base d'un signal de réception d'une lumière provenant de la zone à surveiller (18) dans quel champ de surveillance (40) ou quels champs de surveillance (40) se trouve un objet, en comparant la position des objets détectés avec les champs de surveillance (40),
**caractérisé en ce que**
les champs de surveillance (40) se chevauchent au moins partiellement, de sorte qu'il se forme un second nombre supérieur au premier nombre de segments de surveillance (42), les segments de surveillance (42) se distinguant les uns des autres par le fait de savoir quels champs de surveillance (40) s'y chevauchent, et **en ce que**
un objet détecté est affecté à un segment de surveillance (42) sur la base des champs de surveillance (40) dans lesquels un objet est reconnu.
